# EUROPEAN PATENT SPECIFICATION

(11) **EP 4 249 493 B1**
(45) Date of publication and mention of the grant of the patent: **04.03.2026**
(21) Application number: 21894417.1
(22) Date of filing: 21.10.2021
(51) Int. Cl.: C07F 7/18, C09D 5/00, C09D 7/61, C09D 183/08

(54) **ORGANOSILICON COMPOUND, HYDROLYSIS CONDENSATION PRODUCT OF SAME, AND COATING COMPOSITION**
ORGANOSILICIUMVERBINDUNG, HYDROLYSEKONDENSATIONSPRODUKT DAVON UND BESCHICHTUNGSZUSAMMENSETZUNG
COMPOSÉ D'ORGANOSILICIUM, PRODUIT DE CONDENSATION PAR HYDROLYSE DE CELUI-CI, ET COMPOSITION DE REVÊTEMENT

(30) Priority: 20.11.2020 JP 2020193581
(43) Date of publication of application: 27.09.2023
(73) Proprietor: SHIN-ETSU CHEMICAL CO., LTD., Tokyo 1000005 (JP)
(72) Inventor: TAKAGI, Kazunori, Annaka-shi, Gunma 379-0224 (JP); HIROKAMI, Munenao, Annaka-shi, Gunma 379-0224 (JP); ASO, Fumihiro, Annaka-shi, Gunma 379-0224 (JP)
(74) Representative: Mewburn Ellis LLP
(86) International application number: PCT/JP2021/038938
(87) International publication number: WO 2022/107543

(56) References cited:
- WO-A1-2018/230514
- WO-A1-2018/230514
- CN-A- 110 776 528
- CN-A- 110 776 529
- JP-A- 2018 500 149
- JP-A- 2019 048 966
- JP-A- H01 221 455
- JP-A- S4 844 181
- US-A- 3 705 073
- YU XIAODONG ET AL: "Highly durable antifogging coatings resistant to long-term airborne pollution and intensive UV irradiation", MATERIALS & DESIGN, vol. 194, 1 September 2020 (2020-09-01), AMSTERDAM, NL, pages 108956, XP093219569, ISSN: 0264-1275, DOI: 10.1016/j.matdes.2020.108956
- HUANG KANG-TING ET AL: "Surface Modification for Superhydrophilicity and Underwater Superoleophobicity: Applications in Antifog, Underwater Self-Cleaning, and Oil-Water Separation", APPLIED MATERIALS & INTERFACES, vol. 7, no. 38, 16 September 2015 (2015-09-16), US, pages 21021 - 21029, XP093219585, ISSN: 1944-8244, DOI: 10.1021/acsami.5b07362

## Description

### TECHNICAL FIELD

The present invention relates to an organosilicon compound, a hydrolysis condensation product thereof, and a coating composition containing the organosilicon compound.

### BACKGROUND ART

In recent years, there has been an increasing demand for improvement of the fogging of a substrate formed of an inorganic material such as glass or an organic material such as plastic.

The improvement of the fogging of the substrate is generally achieved by coating a hydrophilic film on the surface of the substrate. For example, Patent Document 1 discloses a coating composition containing, as a main component, an organosilicon compound having a sulfobetaine structure having a positive charge in a nitrogen atom in a nitrogen-containing heterocyclic structure as a coating agent capable of imparting hydrophilicity to a substrate.

However, a coating film prepared from the coating composition of Patent Document 1 does not have sufficient water resistance, and when the coating film is brought into contact with water, the above-mentioned surface characteristics such as hydrophilicity and antifogging properties may be deteriorated, and the improvement of this problem is desired. Literature Document 1 discloses antifogging coatings comprising an organosilicon compound having a sulfobetaine structure.

Literature Document 2 discloses coating compositions comprising a zwitterionic sulfobetaine silane.

### PRIOR ART DOCUMENTS

### PATENT DOCUMENTS

Patent Document 1: JP-A 2019-48966

### LITERATURE DOCUMENTS

Literature Document 1: Xiaodong Yu et al., Materials and Design 194 (2020) 108956
Literature Document 2: Kang-Ting Huang et al., ACS Appl. Mater. Interfaces 7 (2015) 21021-21029

### SUMMARY OF INVENTION

### TECHNICAL PROBLEM

The present invention has been made in view of the above circumstances, and an object thereof is to provide an organosilicon compound that provides a coating composition having excellent hydrophilicity and water resistance of antifogging properties.

### SOLUTION TO PROBLEM

As a result of intensive studies to solve the above problems, the present inventors have found that a specific organosilicon compound having a betaine structure provides a coating composition which has excellent water resistance and can impart persistent hydrophilicity and antifogging performance to a substrate formed of an inorganic material such as glass or an organic material such as plastic, and have completed the present invention.

That is, the present invention provides:
1. An organosilicon compound containing a betaine structure having the following formula (1), 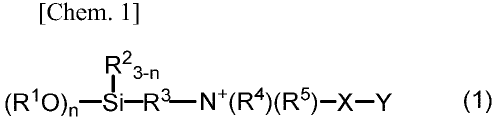 wherein R¹ and R² each independently represent an alkyl group having 1 to 10 carbon atoms or an aryl group having 6 to 10 carbon atoms, R³ represents a divalent organic group containing an aromatic ring having 6 to 14 carbon atoms, R⁴ and R⁵ each independently represent an alkyl group having 1 to 6 carbon atoms, X represents an alkylene group having 1 to 10 carbon atoms, Y represents COO⁻, SO₃⁻, or PO₄⁻, and n is an integer of 1 to 3,
2. The organosilicon compound according to 1, wherein R³ represents a phenylene group,
3. A hydrolysis condensation product of the organosilicon compound according to 1 or 2,
4. A coating composition containing one or more of the organosilicon compound according to 1 and the hydrolysis condensation product thereof, and
5. The coating composition of 4, further containing an inorganic oxide.

### ADVANTAGEOUS EFFECTS OF INVENTION

The organosilicon compound of the present invention provides a coating composition which has excellent water resistance and can impart persistent hydrophilicity and antifogging properties to a substrate made of glass or the like.

### DESCRIPTION OF EMBODIMENTS

Hereinafter, the present invention is described in more detail.

An organosilicon compound of the present invention has the following formula (1).

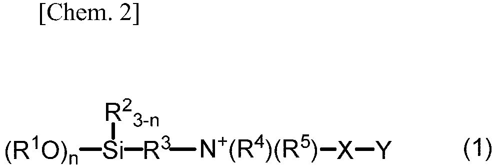

In the formula (1), R¹ each independently represents an alkyl group having 1 to 10 carbon atoms, preferably 1 to 8 carbon atoms, and more preferably 1 to 6 carbon atoms, or an aryl group having 6 to 10 carbon atoms, and preferably 6 to 8 carbon atoms.

The alkyl group of R¹ may be linear, branched, or cyclic, and specific examples thereof include methyl, ethyl, n-propyl, isopropyl, n-butyl, isobutyl, s-butyl, t-butyl, n-pentyl, n-hexyl, and cyclohexyl groups.

Specific examples of the aryl group of R¹ include a phenyl group and a tolyl group.

Among them, R¹ is preferably an alkyl group having 1 to 3 carbon atoms, and more preferably a methyl group or an ethyl group.

R² each independently represents an alkyl group having 1 to 10 carbon atoms, preferably 1 to 8 carbon atoms, and more preferably 1 to 6 carbon atoms, or an aryl group having 6 to 10 carbon atoms, and preferably 6 to 8 carbon atoms. Specific examples of the alkyl group and the aryl group include the same groups as those exemplified for R¹, and among them, a methyl group is preferable.

R³ represents a divalent organic group containing an aromatic ring having 6 to 14 carbon atoms, but is preferably a divalent organic group containing an aromatic hydrocarbon ring, and more preferably a divalent organic group containing a benzene ring or a naphthalene ring.

Specific examples of R³ include, but are not limited to, groups having the following formulas. Among them, a phenylene group having the formula (3) is preferable, and a 1,4-phenylene group is more preferable.

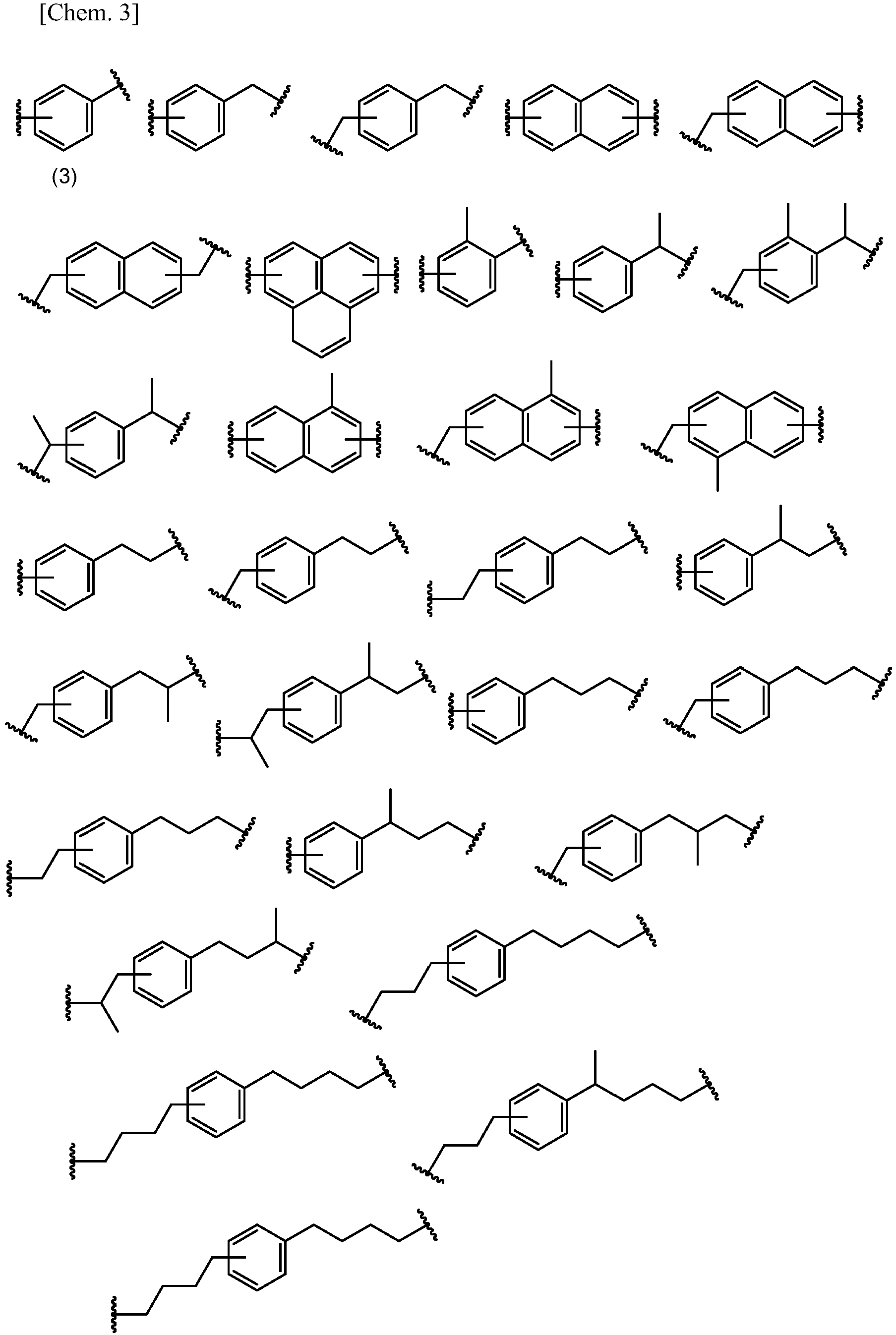

R⁴ and R⁵ each independently represent an alkyl group having 1 to 6 carbon atoms.

The alkyl group of R⁴ and R⁵ may be linear, branched, or cyclic, and specific examples thereof include methyl, ethyl, n-propyl, isopropyl, n-butyl, isobutyl, s-butyl, t-butyl, n-pentyl, n-hexyl, and cyclohexyl groups.

Among them, both R⁴ and R⁵ are preferably a methyl group or an ethyl group, and from the viewpoint of the availability of raw materials and an environmental load at the time of use, both R⁴ and R⁵ are more preferably a methyl group.

X represents an alkylene group having 1 to 10, preferably 1 to 8, and more preferably 1 to 6 carbon atoms.

The alkylene group of X may be linear, branched, or cyclic, and specific examples thereof include methylene, ethylene, trimethylene, propylene, tetramethylene, pentamethylene, hexamethylene, and cyclohexylene groups.

Among them, X is preferably a methylene group, an ethylene group, or a trimethylene group, and more preferably a trimethylene group.

Y represents COO⁻, SO₃⁻, or PO₄⁻ , and SO₃⁻ is preferable from the viewpoint of the durability of a resulting coating film.

n is an integer of 1 to 3, and preferably 3.

As the organosilicon compound of the present invention, an organosilicon compound having the following formula (2) is particularly preferable. 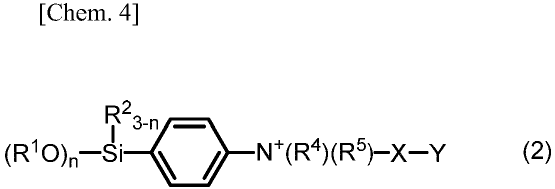 (In the formula, R¹, R², R⁴, R⁵, X, Y and n have the same meanings as described above.)

Specific examples of the organosilicon compound of the present invention are exemplified below, but are not limited thereto. 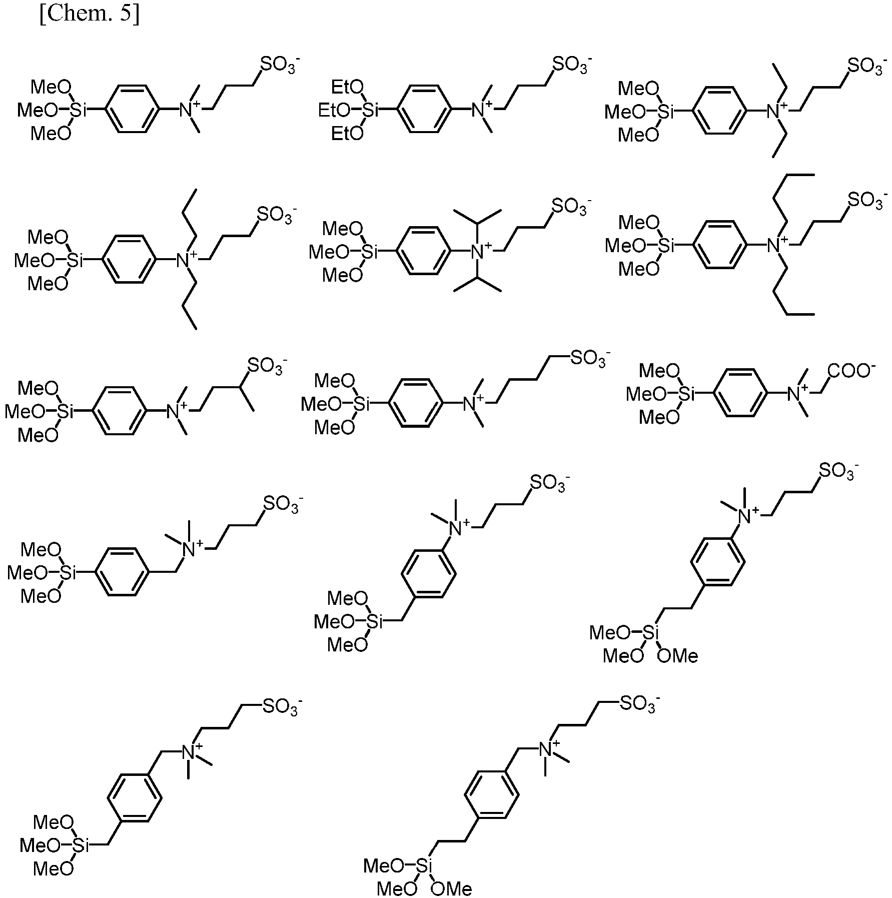 (In the formula, Me represents a methyl group, and Et represents an ethyl group. The same applies hereinafter.)

The organosilicon compound having the formula (1) can be produced by a known method. For example, a sulfonic acid-terminated compound can be produced by reacting a nitrogen-containing organosilicon compound having the following formula (A) with a sultone ring compound having the following formula (B) in an air atmosphere or an inert gas atmosphere such as nitrogen. 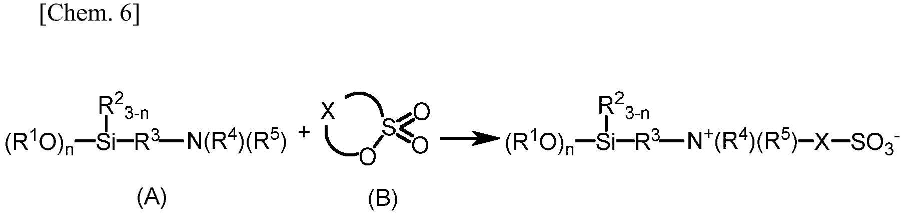 (In the formula, R¹, R², R³, R⁴, R⁵, X and n have the same meanings as described above.)

Specific examples of the compound having the above formula (A) are exemplified below, but are not limited thereto.

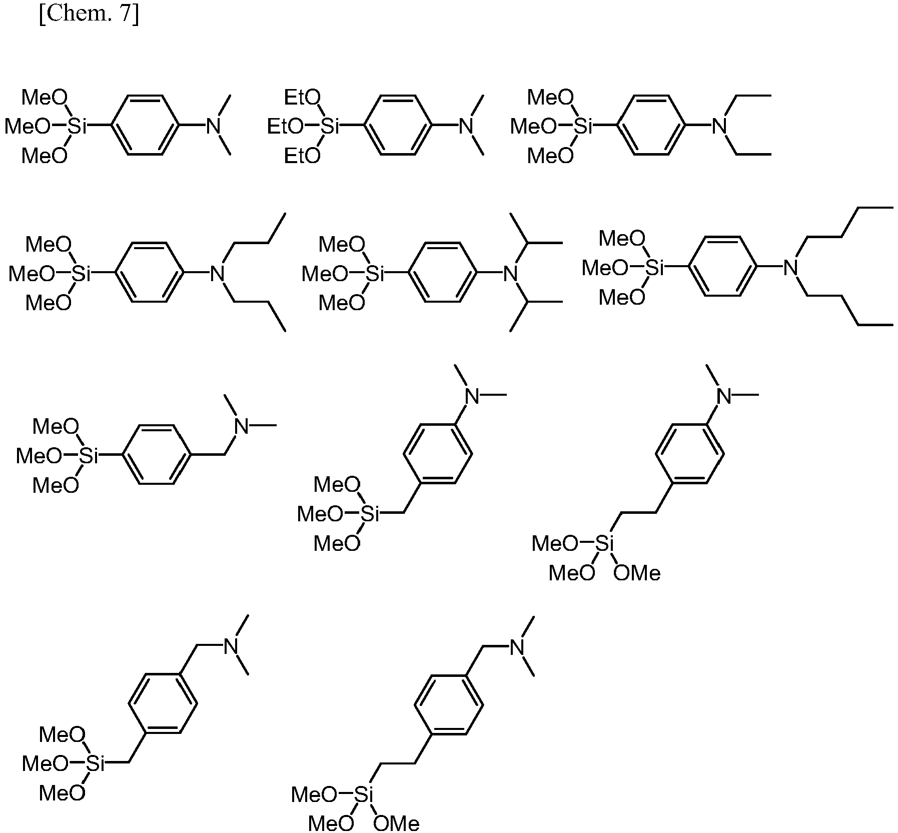

Specific examples of the sultone ring compound having the formula (B) include 1,3-propane sultone, 1,4-butane sultone, 2,4-butane sultone, 1,5-pentane sultone, 2,4-pentane sultone, 1,4-hexane sultone, and 4,6-heptane sultone.

Among them, 1,3-propane sultone, 1,4-butane sultone, and 2,4-butane sultone are preferable, 1,3-propane sultone and 1,4-butane sultone are more preferable, and 1,3-propane sultone is still more preferable.

The reaction can be carried out in the absence of a solvent, but if necessary, the reaction can be carried out in an alcohol solvent that does not inhibit the reaction, such as methanol or ethanol.

A reaction temperature is preferably 0°C to the boiling point of each solvent, and more preferably 0 to 130°C.

A reaction time is preferably 1 to 150 hours, and more preferably 5 to 100 hours.

A use ratio between the organosilicon compound having the formula (A) and the sultone ring compound having the formula (B) in the reaction is preferably 0.7 to 1.3 mol of the organosilicon compound (A) per 1 mol of the sultone ring compound (B).

The coating composition of the present invention contains one or more of the organosilicon compound having the above formula (1) and a hydrolysis condensation product thereof.

In particular, the organosilicon compound of the present invention having the formula (1) can further improve the durability of a film obtained by hydrolysis condensation. When the hydrolysis condensation is performed, another organosilicon compound may be added to perform co-hydrolysis condensation as long as the object of the present invention is not impaired.

Specific examples of other organosilicon compounds include methyltrimethoxysilane, methyltripropoxysilane, methyltriacetoxysilane, methyltributoxysilane, methyltripentoxysilane, methyltriamyloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, ethyltrimethoxysilane, ethyltriethoxysilane, γ-chloropropyltrimethoxysilane, γ-chloropropyltriethoxysilane, γ-chloropropyltriacetoxysilane, 3,3,3-trifluoropropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)γ-aminopropyltrimethoxysilane, N-(β-aminoethyl)γ-aminopropylmethyldimethoxysilane, γ-aminopropylmethyldimethoxysilane, N-(β-aminoethyl)γ-aminopropyltriethoxysilane, N-(β-aminoethyl)γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-mercaptopropylmethyldimethoxysilane, γ-mercaptomethyldiethoxysilane, γ-ureidopropyltriethoxysilane, γ-ureidopropyltrimethoxysilane, γ-ureidopropyltripropoxysilane, (R)-N-1-phenylethyl-N'-triethoxysilylpropylurea, (R)-N-1-phenylethyl-N'-trimethoxysilylpropylurea, 3-isocyanatopropyltriethoxysilane, trifluoropropyltrimethoxysilane, bromopropyltriethoxysilane, diethyldiethoxysilane, diethyldimethoxysilane, trimethylethoxysilane, and trimethylmethoxysilane, and these can be used alone or in combination of two or more thereof.

For the hydrolysis condensation, a catalyst such as an acid such as hydrochloric acid, sulfuric acid, nitric acid, acetic acid, formic acid, oxalic acid, or maleic acid; alkali such as ammonia, methylamine, or ethylamine; and a metal salt of hydrochloric acid, sulfuric acid, or nitric acid or the like may be used.

Examples of a solvent used in a hydrolysis condensation reaction include an alcohol solvent such as methanol, ethanol, isopropanol, n-butanol, t-butanol, pentanol, ethylene glycol, propylene glycol, or 1,4-butanediol; an ether-based solvent such as diethyl ether, tetrahydrofuran, or dioxane; a ketone-based solvent such as acetone or methyl ethyl ketone; an aprotic solvent such as dimethyl sulfoxide or N,N-dimethylformamide; water; and a mixed solvent thereof, and these solvents can be used singly or in combination of two or more kinds thereof.

Among them, an alcohol-based solvent and water are preferable.

The reaction temperature of the hydrolysis condensation is preferably 0°C to the boiling point of the solvent, more preferably 0 to 120°C, and still more preferably 5 to 80°C.

The reaction time is preferably 10 minutes to 80 hours, more preferably 30 minutes to 50 hours, and still more preferably 30 minutes to 2 hours.

The coating composition of the present invention may further contain water, other organosilicon compounds described above, alcohols such as methanol and ethanol, other additives, and the like as long as the object of the present invention is not impaired.

Examples of the other additives include an acid such as hydrochloric acid, sulfuric acid, nitric acid, acetic acid, formic acid, oxalic acid, or maleic acid; alkali such as ammonia, methylamine, or ethylamine; an inorganic oxide; a leveling agent; and a surfactant.

Since a highly durable hydrophilic film is obtained, the coating composition of the present invention particularly preferably contains an inorganic oxide.

As the inorganic oxide, silica fine particles, alumina fine particles, titania fine particles, and magnesium fluoride fine particles and the like are preferable, and these are more preferably used as a colloid solution.

The leveling agent and the surfactant are contained in order to improve the uniformity of the coating film, and can be appropriately selectively used from known leveling agents and surfactants, but commercially available products which are easily obtained are preferably used.

The organosilicon compound having the above formula (1) and contained in the coating composition of the present invention may be reacted with a silanol group on a silica sol (for example, aqueous silica sol: Na⁺ stable alkaline sol ST-30L manufactured by Nissan Chemical Corporation, organosilica sol: organosilica sol IPA-ST manufactured by Nissan Chemical Corporation, and the like, preferably ST-30L).

In this case, specific examples and suitable examples of the solvent used in the reaction include the same solvents as those exemplified in the hydrolysis condensation reaction.

The reaction temperature is preferably 0°C to the boiling point of the solvent, more preferably 0 to 120°C, and still more preferably 5 to 80°C.

The reaction time is preferably 10 minutes to 80 hours, more preferably 30 minutes to 50 hours, and still more preferably 30 minutes to 2 hours.

In the present invention, the solution obtained by the above-described method may be used as it is as the coating composition. As necessary, the solution to be used may be concentrated, or diluted by adding a solvent to the solution, or the solvent in the solution to be used may be replaced with another solvent.

The content of the organosilicon compound having the formula (1) and the hydrolysis condensation product thereof contained in the coating composition of the present invention is not particularly limited, but is preferably 0.0001 to 50 wt% and more preferably 0.001 to 40 wt% per the entire composition from the viewpoint of hydrophilicity.

The coating composition of the present invention can be applied to various substrates to impart hydrophilicity to these substrates.

Specific examples of the material constituting the substrate include glass; synthetic resins {a polymethyl methacrylate resin, a polyethylene terephthalate resin, a polybutylene terephthalate resin, a polyethylene naphthalate resin, an ABS resin, a polycarbonate resin, a polystyrene resin, an epoxy resin, an unsaturated polyester resin, a melamine resin, a diallyl phthalate resin, a polyimide resin, a urethane resin, a nylon resin, a polyethylene resin, a polypropylene resin, a polyvinyl chloride resin, fluororesins (a polytetrafluoroethylene resin, a polychlorotrifluoroethylene resin, a polyvinylidene fluoride resin, a perfluoroalkoxy fluorine resin, a tetrafluoroethylene-hexafluoropropylene copolymer resin, an ethylene-tetrafluoroethylene copolymer resin, and an ethylene-chlorotrifluoroethylene copolymer resin and the like), polybutadiene, polyisopropylene, SBR, nitrile rubber, EPM, EPDM, epichlorohydrin rubber, neoprene rubber, porsulfide, and butyl rubber and the like}; metals (iron, aluminum, stainless steel, titanium, copper, brass, and alloys thereof and the like); natural fibers such as cellulose, cellulose derivatives, cellulose analogs (chitin, chitosan, and porphyran and the like), cotton, silk, and wool; regenerated fibers such as rayon; semi-synthetic fibers such as acetate; synthetic fibers such as vinylon, polyester, nylon, polyethylene, polypropylene, polyurethane, and polyaramid fibers; and composite fibers of these fibers (polyester/cotton and the like), and examples of the form thereof include a substrate, a sheet, a film, and a fiber.

The coating composition of the present invention is applied onto a substrate, and heated and dried as necessary to form a coating film, whereby a hydrophilic coating film can be obtained.

As the coating method, a known method can be used, and for example, a bar coating method, a dip coating method, a spin coating method, a spray coating method, a float coating method, a brush coating method, a gravure coating method, a roll transfer method, a blade coating method, an air knife coating method, a slit coating method, a screen coating method, an inkjet method, and a flexographic printing method and the like can be used. Among them, a bar coating method is preferable.

### EXAMPLES

Hereinafter, the present invention is specifically described with reference to Examples and Comparative Examples, but the present invention is not limited to the following Examples.

### [1] Production of organosilicon compound

### [Example 1-1] Production of organosilicon compound A-1

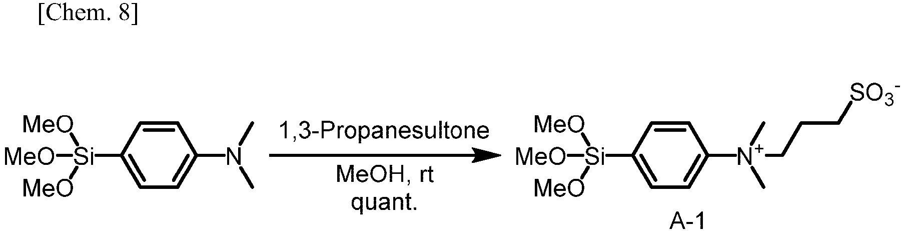

In a reactor, 1.69 g of trimethoxy-4-(N,N-dimethylamino)phenylsilane, 0.64 g of 1,3-propane sultone (manufactured by Tokyo Chemical Industry Co., Ltd.), and 1.77 g of methanol were put, and reacted at 25°C for 24 hours. The reaction product was filtered to obtain 4 g of a methanol solution of an organosilicon compound A-1 (solid content concentration: 59 wt%).

### [Example 1-2] Production of organosilicon compound B-1

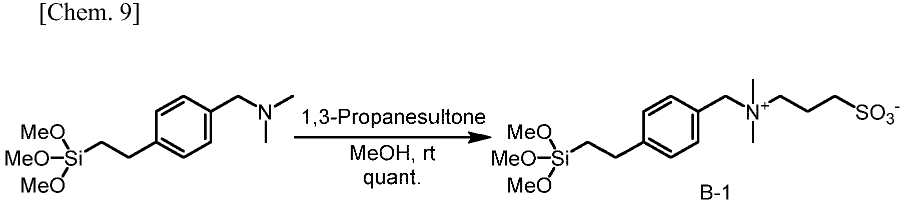

In a reactor, 2.83 g of trimethoxy-4-(N,N-dimethylbenzylamino)ethylenesilane, 0.92 g of 1,3-propane sultone (manufactured by Tokyo Chemical Industry Co., Ltd.), and 2.53 g of methanol were put, and reacted at 25°C for 24 hours. The reaction product was filtered to obtain 6 g of a methanol solution of an organosilicon compound B-1 (solid content concentration: 61 wt%).

### [Comparative Example 1-1] Organosilicon compound C-1

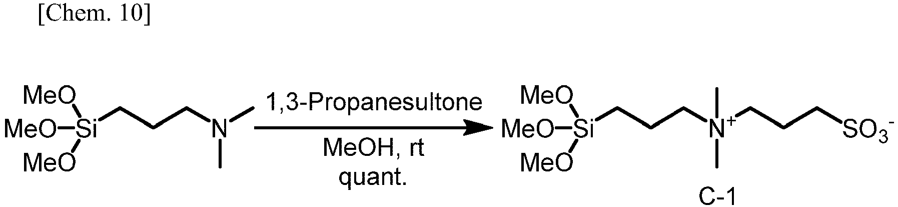

In a reactor, 6.22 g of trimethoxy-3-(N,N-dimethylamino)propylsilane, 2.76 g of 1,3-propane sultone (manufactured by Tokyo Chemical Industry Co., Ltd.), and 7.58 g of methanol were put, and reacted at 25°C for 24 hours. The reaction product was filtered to obtain 16 g of a methanol solution of an organosilicon compound C-1 (solid content concentration: 57 wt%).

### [Comparative Example 1-2] Organosilicon compound D-1

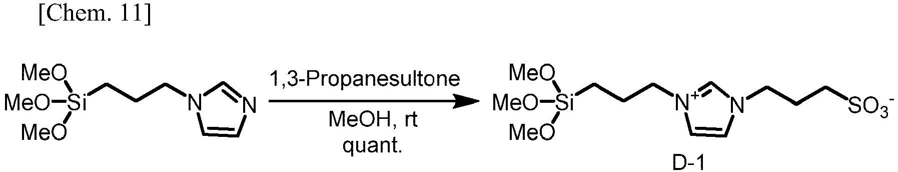

In a reactor, 2.30 g of trimethoxy-3-(imidazole-1-yl)propylsilane, 0.92 g of 1,3-propane sultone (manufactured by Tokyo Chemical Industry Co., Ltd.), and 2.52 g of methanol were put, and reacted at 25°C for 24 hours. The reaction product was filtered to obtain 5 g of a methanol solution of an organosilicon compound D-1 (solid content concentration: 58 wt%).

### [2] Production of coating composition

### [Example 2-1]

In a reactor, 0.1356 g of the methanol solution of the organosilicon compound A-1 obtained in Example 1-1, 0.0644 g of methanol, 0.004 g of ion-exchanged water, and 0.002 g of acetic acid were put, and reacted at 25°C for 1 hour to obtain a brown clear liquid (coating composition K1).

### [Example 2-2]

In a reactor, 0.1316 g of the methanol solution of the organosilicon compound B-1 obtained in Example 1-2, 0.0684 g of methanol, 0.004 g of ion-exchanged water, and 0.002 g of acetic acid were put, and reacted at 25°C for 1 hour to obtain a brown clear liquid (coating composition K2).

### [Comparative Example 2-1]

In a reactor, 0.1413 g of the methanol solution of the organosilicon compound C-1 obtained in Comparative Example 1-1, 0.0587 g of methanol, 0.004 g of ion-exchanged water, and 0.002 g of acetic acid were put, and reacted at 25°C for 1 hour to obtain a clear and colorless liquid (coating composition L1).

### [Comparative Example 2-2]

In a reactor, 0.1373 g of the methanol solution of the organosilicon compound D-1 obtained in Comparative Example 1-2, 0.0627 g of methanol, 0.004 g of ion-exchanged water, and 0.002 g of acetic acid were put, and reacted at 25°C for 1 hour to obtain a clear and colorless liquid (coating composition L2).

### [Example 2-3]

In a reactor, 0.006 g of a solution (solid content concentration: 15 wt%) prepared by diluting the methanol solution of the organosilicon compound A-1 obtained in Example 1-1 with methanol, 0.006 g of a dispersion (solid content concentration: 15 wt%) prepared by diluting Na⁺ stable alkaline silica sol ST-30L (manufactured by Nissan Chemical Corporation) with ion-exchanged water, and 0.002 g of a 25% acetic acid aqueous solution were put, and reacted at 25°C for 1 hour to obtain a white liquid (coating composition K3).

### [Example 2-4]

In a reactor, 0.006 g of a solution (solid content concentration: 15 wt%) prepared by diluting the methanol solution of the organosilicon compound B-1 obtained in Example 1-2 with methanol, 0.006 g of a dispersion (solid content concentration: 15 wt%) prepared by diluting Na⁺ stable alkaline silica sol ST-30L (manufactured by Nissan Chemical Corporation) with ion-exchanged water, and 0.002 g of a 25% acetic acid aqueous solution were put, and reacted at 25°C for 1 hour to obtain a white liquid (coating composition K4).

### [Comparative Example 2-3]

In a reactor, 0.006 g of a solution (solid content concentration: 15 wt%) prepared by diluting the methanol solution of the organosilicon compound C-1 obtained in Comparative Example 1-1 with methanol, 0.006 g of a dispersion (solid content concentration: 15 wt%) prepared by diluting Na⁺ stable alkaline silica sol ST-30L (manufactured by Nissan Chemical Corporation) with ion-exchanged water, and 0.002 g of a 25% acetic acid aqueous solution were put, and reacted at 25°C for 1 hour to obtain a white liquid (coating composition L3).

### [Comparative Example 2-4]

In a reactor, 0.006 g of a solution (solid content concentration: 15 wt%) prepared by diluting the methanol solution of the organosilicon compound D-1 obtained in Comparative Example 1-2 with methanol, 0.006 g of a dispersion (solid content concentration: 15 wt%) prepared by diluting Na⁺ stable alkaline silica sol ST-30L (manufactured by Nissan Chemical Corporation) with ion-exchanged water, and 0.002 g of a 25% acetic acid aqueous solution were put, and reacted at 25°C for 1 hour to obtain a white liquid (coating composition L4).

### [3] Preparation and evaluation of coating film

### [Examples 3-1 to 3-4, Comparative Examples 3-1 to 3-4]

Each of the coating compositions K1 to K4 and L1 to L4 obtained in Examples 2-1 to 2-4 and Comparative Examples 2-1 to 2-4 was applied to a glass plate using a bar coater (No. 4), and immediately thereafter, was dried at 80°C for 30 minutes to prepare a coating film.

Each of the obtained coating films was subjected to the following tests. The results are shown in Table 1.

### (1) Water contact angle

The contact angles (°) of ion-exchanged water were measured at arbitrary five points of each of the coating films with a contact angle measuring device (automatic contact angle meter DM-701 manufactured by Kyowa Interface Science Co., Ltd., droplet amount: 2 µL, measurement interval: 5,000 ms, number of measurements: 5), and the average value thereof was calculated.

### (2) Antifogging properties

The case where the surface of the coating film was fogged by blowing exhalation to the coating film was taken as ×, the case where the surface of the coating film was not fogged was taken as O, and the case where the surface of the coating film was not fogged when the coating film was placed at a height of 3 cm from a water surface in the upper portion of a hot water bath at 60°C was taken as ⊚. The fogging properties (presence or absence of fogging due to water vapor) of each of the above coating films were evaluated.

### (3) Water resistance

Each of the above coating films was immersed in tap water at 25°C for 5 minutes, and the water on the surface of the coating film was then sucked with a paper wiper. Then, the coating film was dried at 25°C for 10 minutes. Thereafter, the water contact angle was measured, and the antifogging properties were evaluated. Furthermore, each of the coating films was immersed in tap water at 25°C for 55 minutes, and the water on the surface of the coating film was then sucked with a paper wiper. Then, the coating film was dried at 25°C for 10 minutes. Thereafter, the water contact angle was measured, and the antifogging properties were evaluated.

**[Table 1]**

| | Coating composition | Initial | | After immersion in water for 5 minutes | | After immersion in water for 1 hour | |
|---|---|---|---|---|---|---|---|
| | | Water contact angle (°) | Antifogging properties | Water contact angle (°) | Antifogging properties | Water contact angle (°) | Antifogging properties |
| Example 3-1 | K-1 | 3.5 | ⊚ | 3.6 | ⊚ | 13.3 | ○ |
| Example 3-2 | K-2 | 9.5 | ⊚ | 13.4 | ○ | 18.4 | ○ |
| Example 3-3 | K-3 | 3.3 | ⊚ | 2.8 | ⊚ | 3.2 | ⊚ |
| Example 3-4 | K-4 | 9.8 | ⊚ | 11.9 | ○ | 14.5 | ○ |
| Comparative Example 3-1 | L-1 | 9.9 | ⊚ | 17.8 | × | 23.5 | × |
| Comparative Example 3-2 | L-2 | 7.4 | ⊚ | 16.1 | × | 19.6 | × |
| Comparative Example 3-3 | L-3 | 8.4 | ⊚ | 12.5 | ○ | 19.3 | × |
| Comparative Example 3-4 | L-4 | 6.1 | ⊚ | 11.6 | ○ | 17.7 | × |

As shown in Table 1, it is found that the coating films obtained in Examples 3-1 to 3-4 maintain excellent hydrophilicity and antifogging properties even after the water resistance test (immersion in water for 5 minutes, immersion in water for 1 hour). In particular, it is found that the coating film of Example 3-3 has excellent durability.

Meanwhile, in the coating films of Comparative Examples 3-1 to 3-4, the exhalation defogging properties after immersion in water for 1 hour disappear, and it is found that the coating films have poor durability.

## Claims

1. An organosilicon compound containing a betaine structure having the following formula (1): 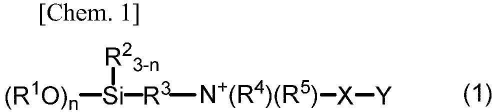 wherein R¹ and R² each independently represent a linear, branched or cyclic alkyl group having 1 to 10 carbon atoms or an aryl group having 6 to 10 carbon atoms, R³ represents a divalent organic group containing an aromatic ring having 6 to 14 carbon atoms, R⁴ and R⁵ each independently represent an alkyl group having 1 to 6 carbon atoms, X represents an alkylene group having 1 to 10 carbon atoms, Y represents COO⁻, SO₃⁻, or PO₄⁻, and n is an integer of 1 to 3.

2. The organosilicon compound according to claim 1, wherein R³ represents a phenylene group.

3. A hydrolysis condensation product of the organosilicon compound according to claim 1 or 2.

4. A coating composition comprising one or more of the organosilicon compound according to claim 1 and the hydrolysis condensation product thereof.

5. The coating composition according to claim 4, further comprising an inorganic oxide.

## Patentansprüche

1. Organosilicium-Verbindung, die eine Betainstruktur enthält, welche die folgende Formel (1) aufweist: 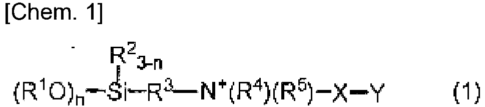 worin R¹ und R² jeweils unabhängig voneinander für eine unverzweigte, verzweigte oder zyklische Alkylgruppe mit 1 bis 10 Kohlenstoffatomen oder eine Arylgruppe mit 6 bis 10 Kohlenstoffatomen stehen, R³ für eine zweiwertige organische Gruppe steht, die einen aromatischen Ring enthält, der 6 bis 14 Kohlenstoffatome aufweist, R⁴ und R⁵ jeweils unabhängig voneinander für eine Alkylgruppe mit 1 bis 6 Kohlenstoffatomen stehen, X für eine Alkylengruppe mit 1 bis 10 Kohlenstoffatomen steht, Y für COO⁻, SO₃⁻ oder PO₄⁻ steht und n eine ganze Zahl von 1 bis 3 ist.

2. Organosilicium-Verbindung nach Anspruch 1, worin R³ für eine Phenylengruppe steht.

3. Hydrolysekondensationsprodukt einer Organosilicium-Verbindung nach Anspruch 1 oder 2.

4. Beschichtungszusammensetzung, die eine oder mehrere einer Organosilicium-Verbindung nach Anspruch 1 und eines Hydrolysekondensationsprodukts davon umfasst.

5. Beschichtungszusammensetzung nach Anspruch 4, die weiters ein anorganisches Oxid umfasst.

## Revendications

1. Composé d'organosilicium contenant une structure de bétaïne présentant la formule (1) suivante : 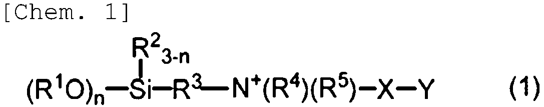 dans laquelle R¹ et R² représentent chacun indépendamment un groupe alkyle linéaire, ramifié ou cyclique présentant de 1 à 10 atomes de carbone ou un groupe aryle présentant de 6 à 10 atomes de carbone, R³ représente un groupe organique divalent contenant un cycle aromatique présentant de 6 à 14 atomes de carbone, R⁴ et R⁵ représentent chacun indépendamment un groupe alkyle présentant de 1 à 6 atomes de carbone, X représente un groupe alkylène présentant de 1 à 10 atomes de carbone, Y représente COO⁻, SO₃⁻ ou PO₄⁻, et n est un entier de 1 à 3.

2. Composé d'organosilicium selon la revendication 1, dans lequel R³ représente un groupe phénylène.

3. Produit de condensation par hydrolyse du composé d'organosilicium selon la revendication 1 ou 2.

4. Composition de revêtement comprenant un ou plusieurs parmi le composé d'organosilicium selon la revendication 1 et le produit de condensation par hydrolyse de celui-ci.

5. Composition de revêtement selon la revendication 4, comprenant en outre un oxyde inorganique.
